# EUROPÄISCHE PATENTSCHRIFT

(11) **EP 2 257 149 B1**
(45) Veröffentlichungstag und Bekanntmachung des Hinweises auf die Patenterteilung: **19.09.2012**
(21) Anmeldenummer: 10709406.2
(22) Anmeldetag: 08.03.2010
(51) Int. Cl.: A01C 7/08

(54) **PNEUMATISCH ARBEITENDE VERTEILMASCHINE**
PNEUMATICALLY FUNCTIONING DISPERSING MACHINE
MACHINE D'ÉPANDAGE PNEUMATIQUE

(30) Priorität: 16.04.2009 DE 102009003791
(43) Veröffentlichungstag der Anmeldung: 08.12.2010
(73) Patentinhaber: Amazonen-Werke H. Dreyer GmbH & Co. KG, 49205 Hasbergen (DE)
(72) Erfinder: WILKEN, Martin, 26409 Wittmund (DE); BRUNS, Helmut, 27804 Berne (DE)
(86) Internationale Anmeldenummer: PCT/EP2010/001430
(87) Internationale Veröffentlichungsnummer: WO 2010/118801

(56) Entgegenhaltungen:
- EP-A1- 0 956 757
- EP-A1- 1 752 030
- EP-A2- 0 752 203
- DE-A1- 3 906 971

## Beschreibung

Die Erfindung betrifft eine pneumatisch arbeitende Verteilmaschine gemäß des Oberbegriffes des Patentanspruches 1.

Eine derartige pneumatisch arbeitende Verteilmaschine ist beispielsweise durch die EP 09 56 757 B1 bekannt. Diese Verteilmaschine weist eine Förderleitung mit einem Umlenkbogen auf. Der Umlenkbogen mündet in einem senkrecht aufsteigenden Steigrohr, welches einen Bereich der Förderleitung bildet. Dieses Steigrohr weist ein wellenförmiges Zerstreuungsrohr auf. Der Umlenkbogen zwischen dem horizontal verlaufenden Bereich der Förderleitung und dem senkrecht aufsteigenden Bereich der Förderleitung ist als Flachrohrbogen ausgebildet. Durch den Flachrohrbogen soll eine bessere und gleichmäßigere Verteilung und Zuführung des Saatgutes in dem Luftstrom zu dem Zerstreuungsrohr und dem Verteiler erreicht werden. Die Ausgestaltung des Umlenkbogens als Flachrohrbogen erfordert eine besondere Fertigung des Umlenkbogens sowie gesonderte Übergangsstücke zwischen den einen runden Querschnitt aufweisenden übrigen Bereich der Förderleitung und dem Umlenkbogen.

Der Erfindung liegt die Aufgabe zugrunde, mit einfachen Mitteln und einfacher Ausgestaltung des Umlenkbogens eine gute und gleichmäßige Zuführung und Verteilung des Saatgutes im Luftstrom zu dem Zerstreuungsrohr vorzugsweise ohne zusätzliche Einbauten in den Umlenkbogen zu erreichen.

Diese Aufgabe wird erfindungsgemäß durch die kennzeichnenden Merkmale des Patentanspruches 1 gelöst. Infolge dieser Maßnahmen kann der Umlenkbogen aus herkömmlichen Krümmungsbogen hergestellt werden. Derartige Krümmungsbogen lassen sich in einfacher Weise herstellen und aneinander anfügen. Hierdurch ist eine preiswerte Fertigung der Krümmungsbogen für den Umlenkbogen möglich. In überraschender Weise hat sich gezeigt, dass mit einer derartigen Ausgestaltung des Umlenkbogens durch die erfindungsgemäße Anordnung der Krümmungsbogen eine gleichmäßige Verteilung des Saatgutes im Luftstrom bei der Übergabe in dem senkrecht aufsteigenden Bereich der Förderleitung zu dem wellenförmigen Zerstreuungsrohr erreicht wird. Durch eine derartig kombinatorische Gesamtwirkung von einfindungsgemäßen Umlenkbogen in Verbindung mit dem wellenförmigen Zerstreuungsrohr lässt sich in äußerst einfacher Weise eine gleichmäßige Zuführung des Saatgutluftgemisches zu dem Verteiler und damit eine gleichmäßige Aufteilung auf die von dem Verteiler wegführenden Leitung zu den einzelnen Ausbringorganen überraschend Weise erreichen.

Durch die erfindungsgemäße Anordnung der Krümmungsbogen des Umlenkbogens hintereinander ergibt sich so in einfacher Weise ein S-förmig verlaufend ausgestalteter Umlenkbogen.

Eine einfache Ausgestaltung der gesamten Förderleitung ergibt sich dadurch, dass die Förderleitung auch in Bereich des Umlenkbogens einen runden Querschnitt aufweist.

Ein vorteilhafter Verlauf der Krümmungsbögen zur Erreichung einer gleichmäßigen Verteilung des Saatgutes im Luftstrom und bei der Übergabe in den senkrecht verlaufenden Bereich der Förderleitung wird dadurch erreicht, dass die Krümmungsbögen der Umlenkbögen ein Radius - Durchmesser - Verhältnis zwischen 1 : 1 und 1 : 3 aufweisen.

Eine besonders einfache Ausgestaltung des Umlenkbogens ergibt sich dadurch, dass die Krümmungsbögen über ihren gesamten Verlauf jeweils zumindest annähernd den gleichen Krümmungsradius aufweisen.

Weiterhin ergibt sich eine sehr einfache Ausgestaltung der Förderleitung auch im Bereich der Umlenkbögen dadurch, dass die Krümmungsbögen über ihren gesamten Verlauf jeweils zumindest annähernd den gleichen Durchmesser aufweisen.

Weitere Einzelheiten der Erfindung sind der Beispielsbeschreibung und den Zeichnungen zu entnehmen.

Hierbei zeigen
- Fig. 1: die Anordnung des Vorratsbehälters der Dosiereinrichtung und Förderleitung mit Verteilerkopf einer Verteilmaschine in Seitenansicht und Prinzipdarstellung,
- Fig. 2: eine weitere Anordnung des Vorratsbehälters der Dosiereinrichtung und Förderleitung mit Verteilerkopf einer Verteilmaschine in Seitenansicht und Prinzipdarstellung und
- Fig. 3: eine weitere Anordnung des Vorratsbehälters der Dosiereinrichtung und Förderleitung mit Verteilerkopf einer Verteilmaschine in Seitenansicht und Prinzipdarstellung.

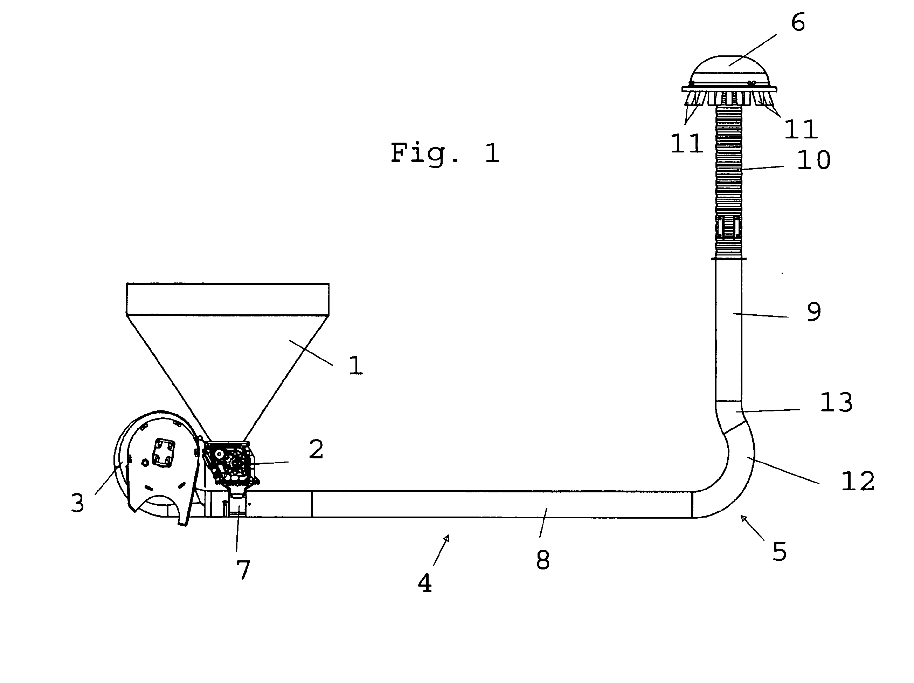

Der Einfachheit halber sind in der Zeichnung gemäß Fig. 1 lediglich der Vorratsbehälter 1, die Dosiereinrichtung 2, die von dem angetriebenen Gebläse 3 pneumatisch beaufschlagte Förderleitung 4 mit Umlenkbogen 5 und einem als Verteilerkopf 6 ausgebildeten Verteiler dargestellt. In dem Vorratsbehälter 1 befindet sich das auszubringende Material, hier beispielsweise Saatgut. Dieses sich im Vorratsbehälter 1 befindliche Saatgut wird über das Dosierorgan 2 in einstellbaren Mengen über eine Schleuse 7 in den Förderluftstrom der Förderleitung 4 eingespeist. Über den horizontal verlaufenden Bereich 8 der Förderleitung wird das Saatgut von dem Luftstrom, der von dem angetriebenen Gebläse 3 erzeugt wird dem zwischen dem horizontalen Bereich 8 der Förderleitung 4 und dem senkrecht aufsteigenden Bereich 9 der Förderleitung 4 angeordneten Umlenkbogen 5 zugeführt. Der senkrecht aufsteigende Bereich 9 der Förderleitung 4 weist einen Bereich auf, der als wellenförmiges Zerstreuungsrohr 10 ausgebildet ist. Am Ende der senkrecht aufsteigenden Förderleitung 4 ist der als Verteilerkopf 6 ausgebildet Verteiler angeordnet, von dem aus Abgangsleitungen 11, an denen zu einzelnen Ausbringorganen, die beispielsweise als Säschare ausbildet sind, führende Leitungen angeschlossen sind. Von dem Verteilerkopf 6 wird das über dem Zerstreuungsrohr 10 dem Verteiler 6 zugeführten Saatgut in gleichmäßiger Weise auf die einzelnen Abgangsleitungen 11 aufgeteilt.

Der Umlenkbogen 5 weist zwei aneinander anschließende Krümmungsbögen 12 und 13 auf. Der erste Krümmungsbogen 12 weist eine Krümmungsverlauf von über 90°, hier von 135° auf. An den ersten Krümmungsbogen 12 schließt sich ein weiterer Krümmungsbogen 13 des Umlenkbogens 5 mit entgegengesetzter Krümmung an, der über das über 90° hinausgehende Krümmungswinkelmaß des ersten Krümmungsbogens 12, hier 45° des ersten Krümmungsbogens verläuft. Hierdurch wird erreicht, dass durch die über 90° größere Krümmung hinausgehende Krümmung durch den zweiten Krümmungsbogen 13 wieder aufgehoben wird, so dass an dem Ende des Umlenkbogens 5, der an dem horizontal verlaufenden Zuführungsbereich 8 des Förderrohres 4 angeschlossen ist, der senkrecht aufsteigende Bereich 9 der Förderleitung 4, welches das wellenförmige Zerstreuungsrohr 10 aufweist, angeordnet werden kann.

Der Umlenkbogen 5 ist mit seinen beiden Krümmungsbögen 12 und 13, wie der Fig. 1 zu entnehmen ist, S-bogenförmig verlaufend ausgestaltet. Die Förderleitung 4 weist über ihren gesamten Verlauf, also auch im Bereich des Umlenkbogens 5 einen runden Querschnitt auf.

Die Krümmungsbögen 12 und des Umlenkbogens weisen gemäß Fig. 1 einen Radiusdurchmesserverhältnis von 1 : 2 auf. Die Krümmungsbögen 12 und 13 weisen über ihren gesamten Verlauf den gleichen Krümmungsradius auf. Weiterhin weisen die Krümmungsbögen 12 und 13 in ihrem gesamten Verlauf den gleichen Durchmesser auf.

Durch den S-förmig ausgestalteten Verlauf des von den Krümmungsbögen 12 und 13 gebildeten Umlenkbogens 5 wird eine Vergleichmäßigung des Saatgutes über den Querschnitt der Förderleitung am Ende des Umlenkbogens im Luftstrom bei der Übergabe in den senkrecht aufsteigenden Bereich der Förderleitung zu den wellenförmigen Zerstreuungsrohr erreicht, so dass sich in überraschender Weise eine äußerst gleichmäßige Verteilung des Saatgutes im Luftstrom im Zusammenwirken mit dem Zerstreuungsrohr 10 am Ende der Förderleitung 4 bei der Übergabe zu dem Verteiler 6 ergibt. Hierdurch wird eine sehr gleichmäßige Verteilung des Saatgutes auf die einzelnen Abgangsleitungen 11 über den Verteiler 6 erreicht.

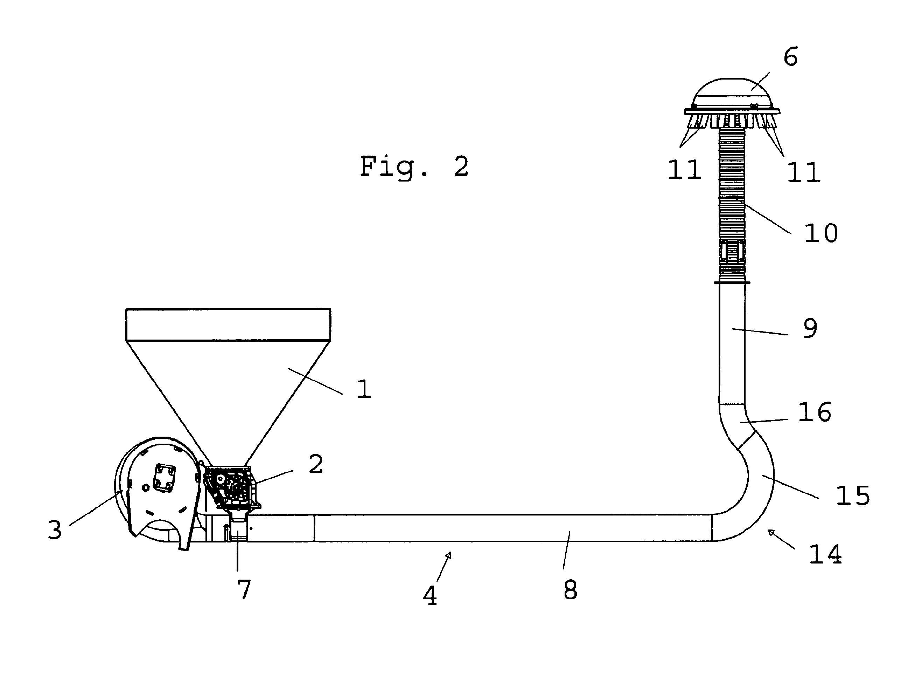

Der Umlenkbogen 14 gemäß dem Ausführungsbeispiel nach Fig. 2 unterscheidet sich von dem Umlenkbogen 5 nach dem Ausbildungsbeispiel nach Fig. 1 durch eine andere Ausgestaltung der Krümmungsbogen 15 und 16. Der erste Krümmungsbogen 15 verläuft über ein Krümmungswinkelmaß von 120°, während der zweite Krümmungsbogen 16 in entgegengesetzter Krümmungsrichtung angeordnet ist und über ein Krümmungswinkelmaß von 30° verläuft. Das Radius-Durchmeser-Verhältnis beträgt 1 : 2 bei beiden Krümmungsbögen 15 und 16.

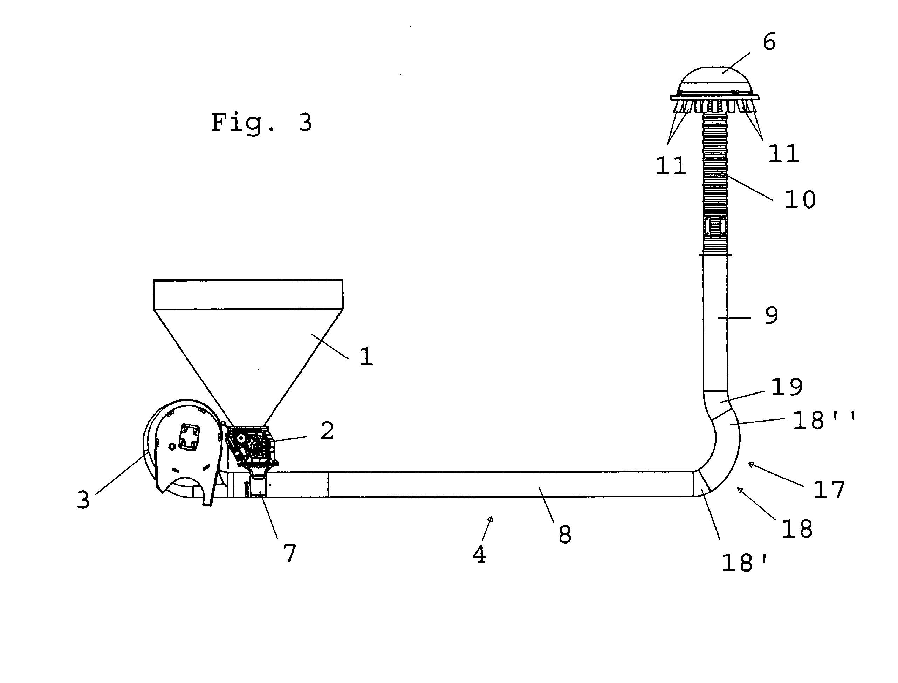

Der Umlenkbogen 17 gemäß dem Ausführungsbeispiel nach Fig. 3 besteht aus den Krümmungsbögen 18 und 19. Der erste Krümmungsbogen 18 steht aus den Teilkrümmungsbögen 18' und 18''. Der erste Teilkrümmungsbogen 18' verläuft über ein Krümmungswinkelmaß von 30°, während der daran angesetzte zweite Teil 18'' des Krümmungsbogens 18 über ein Krümmungswinkelmaß von 90° verläuft. Somit weist der erste Krümmungsbogen 18 ein Krümmungswinkelmaß von 120° auf. Der daran anschließende weitere Krümmungsbogen 19 weist ein Krümmungswinkelmaß von 30° mit entgegengesetzter Krümmung auf. Das Radius-Durchmesser-Verhältnis beträgt bei dem ersten Teilkrümmungsbogen 18' 1 : 1. Das Radius-Durchmesser-Verhältnis bei dem Teilkrümmungsbogen 18'' und dem zweiten Krümmungsbogen 19 beträgt 1 : 2.

## Patentansprüche

1. Pneumatisch arbeitende Verteilmaschine zum Verteilen von Saatgut oder Düngemittel,
mit einem Vorratsbehälter (1) für das Verteilgut,
einem damit in Verbindung stehenden Dosierorgan (2),
einem Verteiler (6) der über eine pneumatische Förderleitung (4) mit dem Dosierorgan (2) verbunden ist,
von dem Verteiler (6) führenden Leitungen (11) zu einzelnen Ausbringorganen,
wobei die pneumatische Förderleitung (4) ab zumindest einem Umlenkbogen (5, 14, 17) zumindest einen Richtungswechsel beschreibt und im Wesentlichen senkrecht aufsteigend an den Verteiler (6) herangeführt ist,
wobei zumindest der letzte sich vor dem Umlenkbogen (5, 14, 17) befindliche Bereich der pneumatischen Förderleitung zumindest annähernd horizontal verlaufend angeordnet ist, wobei der senkrecht aufsteigende Bereich der Förderleitung zwischen dem Umlenkbogen und dem Verteiler zumindest teilweise als wellenförmiges Zerstreuungsrohr ausgebildet ist,
**dadurch gekennzeichnet,**
**dass** der Umlenkbogen (5,14,17) in Förderrichtung gesehen einen ersten Krümmungsbogen (12,15,18) mit mehr als 90°, vorzugsweise 110° bis 135° aufweist,
**dass** sich an den ersten Krümmungsbogen (12,15,18) ein weiterer Krümmungsbogen (13,16,19) des Umlenkbogens (5,14,17) mit entgegengesetzter Krümmung anschließt, der über das über 90° hinausgehende Krümmungswinkelmaß des ersten Krümmungsbogens (12,15,18)verläuft.

2. Verteilmaschine nach Anspruch 1, **dadurch gekennzeichnet, dass** der Umlenkbogen (5,14,17) mit seinen beiden Krümmungsbögen (12,13,15,16,18,19) S-förmig verlaufend ausgestaltet ist.

3. Verteilmaschine nach einem oder mehreren der vorstehenden Ansprüche, **dadurch gekennzeichnet, dass** die Förderleitung (4) auch in Bereich des Umlenkbogens (5,14,17) einen runden Querschnitt aufweist.

4. Verteilmaschine nach einem oder mehreren der vorstehenden Ansprüche, **dadurch gekennzeichnet, dass** die Krümmungsbögen (12,13,15,16,18,19) der Umlenkbögen ein Radius - Durchmesser - Verhältnis zwischen 1 : 1 und 1 : 3 aufweisen.

5. Verteilmaschine nach einem oder mehreren der vorstehenden Ansprüche, **dadurch gekennzeichnet, dass** die Krümmungsbögen (12,13,15,16,18,19) über ihren gesamten Verlauf jeweils zumindest annähernd den gleichen Krümmungsradius aufweisen.

6. Verteilmaschine nach einem oder mehreren der vorstehenden Ansprüche, **dadurch gekennzeichnet, dass** die Krümmungsbögen (12,13,15,16,18,19) über ihren gesamten Verlauf jeweils zumindest annähernd den gleichen Durchmesser aufweisen.

## Claims

1. Pneumatically operating distribution machine for distributing seed or fertilizer,
having a storage container (1) for the material to be distributed,
a metering member (2) connected thereto,
a distributor (6) which is connected to the metering member (2) via a pneumatic feed line (4), lines (11) that lead from the distributor (6) to individual dispensing members,
wherein the pneumatic feed line (4) describes at least one change in direction from at least one deflecting bend (5, 14, 17) and is guided in a substantially vertically rising manner up to the distributor (6),
wherein at least the last region of the pneumatic feed line before the deflecting bend (5, 14, 17) is arranged in a manner extending at least approximately horizontally, wherein the vertically rising region of the feed line between the deflecting bend and the distributor is formed at least partially as a corrugated spreading tube,
**characterized**
**in that** the deflecting bend (5, 14, 17), as seen in the feed direction, has a first arc of curvature (12, 15, 18) of more than 90°, preferably 110° to 135°,
**in that** the first arc of curvature (12, 15, 18) is followed by a further arc of curvature (13, 16, 19) of the deflecting bend (5, 14, 17) with curvature in the opposite direction, said further arc of curvature (13, 16, 19) extending over the angular curvature greater than 90° of the first arc of curvature (12, 15, 18).

2. Distribution machine according to Claim 1, **characterized in that** the deflecting bend (5, 14, 17) is configured in an S-shaped manner with its two arcs of curvature (12, 13, 15, 16, 18, 19).

3. Distribution machine according to one or more of the preceding claims, **characterized in that** the feed line (4) also has a round cross section in the region of the deflecting bend (5, 14, 17).

4. Distribution machine according to one of more of the preceding claims, **characterized in that** the arcs of curvature (12, 13, 15, 16, 18, 19) of the deflecting bends have a radius/diameter ratio of between 1:1 and 1:3.

5. Distribution machine according to one or more of the preceding claims, **characterized in that** the arcs of curvature (12, 13, 15, 16, 18, 19) each have at least approximately the same radius of curvature along their entire course.

6. Distribution machine according to one or more of the preceding claims, **characterized in that** the arcs of curvature (12, 13, 15, 16, 18, 19) each have at least approximately the same diameter along their entire course.

## Revendications

1. Machine d'épandage pneumatique pour épandre des semences ou des engrais, comprenant :
un réservoir (1) pour le produit à épandre,
un organe de dosage (2) raccordé à celui-ci,
un épandeur (6) qui est raccordé à l'organe de dosage (2) par le biais d'une conduite de transport pneumatique (4),
des conduites (11) conduisant depuis l'épandeur (6) jusqu'à des organes de décharge individuels,
la conduite de transport pneumatique (4) à partir d'au moins un arc de déviation (5, 14, 17) décrivant au moins un changement de direction et étant rapprochée de l'épandeur (6) en montant essentiellement verticalement,
au moins la dernière région de la conduite de transport pneumatique se trouvant avant l'arc de déviation (5, 14, 17) étant disposée de manière à s'étendre au moins approximativement horizontalement, la région de la conduite de transport montant verticalement étant réalisée entre l'arc de déviation et l'épandeur au moins en partie sous forme de tube diffuseur de forme ondulée,
**caractérisée en ce que**
l'arc de déviation (5, 14, 17), vu dans la direction de transport, présente un premier arc courbe (12, 15, 18) de plus de 90°, de préférence de 110° à 135°,
**en ce qu'**un arc courbe supplémentaire (13, 16, 19) de l'arc de déviation (5, 14, 17), de courbure opposée, se raccorde au premier arc courbe (12, 15, 18), lequel s'étend sur la plage de courbure angulaire au-delà de 90° du premier arc courbe (12, 15, 18).

2. Machine d'épandage selon la revendication 1, **caractérisée en ce que** l'arc de déviation (5, 14, 17) est configuré avec ses deux arcs courbes (12, 13, 15, 16, 18, 19) de manière à s'étendre en forme de S.

3. Machine d'épandage selon l'une quelconque ou plusieurs des revendications précédentes, **caractérisée en ce que** la conduite de transport (4) présente également une section transversale ronde dans la région de l'arc de déviation (5, 14, 17).

4. Machine d'épandage selon l'une quelconque ou plusieurs des revendications précédentes, **caractérisée en ce que** les arcs courbes (12, 13, 15, 16, 18, 19) des arcs de déviation présentent un rapport rayon-diamètre compris entre 1:1 et 1:3.

5. Machine d'épandage selon l'une quelconque ou plusieurs des revendications précédentes, **caractérisée en ce que** les arcs courbes (12, 13, 15, 16, 18, 19) présentent sur toute leur étendue à chaque fois au moins approximativement le même rayon de courbure.

6. Machine d'épandage selon l'une quelconque ou plusieurs des revendications précédentes, **caractérisée en ce que** les arcs courbes (12, 13, 15, 16, 18, 19) présentent sur toute leur étendue à chaque fois au moins approximativement le même diamètre.
